# EUROPÄISCHE PATENTSCHRIFT

(11) **EP 2 066 504 B1**
(45) Veröffentlichungstag und Bekanntmachung des Hinweises auf die Patenterteilung: **20.03.2013**
(21) Anmeldenummer: 07818264.9
(22) Anmeldetag: 20.09.2007
(51) Int. Cl.: B60B 39/06, B60B 39/10, B60B 39/02, B60B 39/08

(54) **VERFAHREN UND EINRICHTUNG ZUR ÜBERWACHUNG UND AUFBEREITUNG DES SANDVORRATES IN EINEM SANDBEHÄLTER VON SANDSTREUVORRICHTUNGEN BEI FAHRZEUGEN, INSBESONDERE SCHIENENFAHRZEUGEN**
METHOD AND DEVICE FOR MONITORING AND PREPARING THE SAND SUPPLY IN A SAND TANK OF SAND SCATTERING DEVICES IN VEHICLES, IN PARTICULAR RAIL VEHICLES
PROCÉDÉ ET DISPOSITIF DE SURVEILLANCE ET DE PRÉPARATION DE LA RÉSERVE DE SABLE DANS UN RÉSERVOIR DE SABLE DE DIFFUSEURS DE SABLIÈRE DE VÉHICULES, EN PARTICULIER DES VÉHICULES FERROVIAIRES

(30) Priorität: 26.09.2006 AT 16012006
(43) Veröffentlichungstag der Anmeldung: 10.06.2009
(73) Patentinhaber: FAIVELEY TRANSPORT, 93000 Saint-Denis (FR)
(72) Erfinder: BARTLING, Werner, 31008 Elze (DE)
(74) Vertreter: Sonn & Partner Patentanwälte
(86) Internationale Anmeldenummer: PCT/EP2007/008172
(87) Internationale Veröffentlichungsnummer: WO 2008/037389

(56) Entgegenhaltungen:
- EP-A- 0 178 289
- EP-A- 0 534 828
- WO-A-00/71399
- WO-A-2005/077679
- WO-A-2007/045310
- US-A- 3 827 736

## Beschreibung

Die Erfindung betrifft ein Verfahren und eine Einrichtung zur Überwachung und Aufbereitung des Sandvorrates in einem Sandbehälter von Sandstreuvorrichtungen bei Fahrzeugen, insbesondere Schienenfahrzeugen.

Sandstreuvorrichtungen gehören bei Schienenfahrzeugen zu den Systemen, die den Fahrzeugsicherheitsausrüstungen, der Brems- und Antriebstechnik zuzuordnen sind. Sie erfüllen die Aufgabe, bei unzureichender Haftreibung zwischen den Fahrzeugrädern und Schienen (während eines Bremsvorganges oder beim Beschleunigen eines Fahrzeugs) eine Reibwertverbesserung zu bewirken.

Sandmengen werden üblicherweise über kundenseitige, projektspezifische Lastenhefte definiert bzw. vorbestimmt, und somit ist eine separate Steuereinheit zwecks individueller Sandmengeneinstellung notwendig.

Der induktive Sensor dient nur der IST-Datenerfassung.

Durch die gattungsgemäße EP 0 534 828 A ist ein Verfahren zur Überwachung des Sandvorrates in einem Sandbehälter einer Sandstreuvorrichtung eines Fahrzeuges, wobei ein Impulsgeber zur Überwachung des Niveaus des Sandvorrates vorgesehen ist und diesen an einer Kontrollleiste im Bereich des Fahrzeugführer anzeigt, bekannt geworden, welches den einem Injektor durch eine Sandzufuhrleitung zugeführten Sandstrom überwacht und das Vorbeiströmen des Sandstromes an die Kontrollstelle meldet.

Durch die WO 2005/077679 A1 ist eine Einrichtung zur Überwachung des Flusses von Streugut in Fahrzeugen bekannt geworden, bei welcher im Bereich des Flusses des Streugutes Sensoren vorgesehen sind, welche mit einer die ermittelten Daten auswertenden Einrichtung versehen sind. Das System ist mit einer Anzeigevorrichtung im Führerstand des Fahrzeuges verbunden.

Durch die EP 0 499 199 A2 ist eine selbsttätig wirkende Füllstandsanzeigevorrichtung bekannt geworden, welche auf optischem Weg durch Messung der Gewichtsdifferenz selbsttätig das Sandvolumen im Behälter feststellt und dann eine Anzeige vermittelt.

Durch die WO 2000/071399 A1 wird ein Detektor zur Erfassung der Füllmenge eines Behälters, insbesondere für Sand, erläutert. Ein elektrisches Signal eines Sensors wird in ein Steuergerät übertragen, welches mit einer Anzeigevorrichtung im Führerstand verbunden ist.

Durch die EP 0 656 529 A1 ist ein Detektor zur Erfassung des Sand-Füllstandes in einem Behälter einer Sandungsanlage bekannt geworden. Bei Unterschreitung einer bestimmten Füllmenge erfolgt eine Warnmeldung an den Triebfahrzeugführer.

Eine ähnliche Anlage ist durch die RU 2 283 788 Cl bekannt geworden.

Alle bekannten Anlagen haben den an sie gestellten Anforderungen hinsichtlich Betriebssicherheit nicht zufriedenstellend entsprochen.

Aufgabe der Erfindung ist es, ein betriebssicheres Überwachungs- und Analysesystem zu schaffen, das in der Lage ist, die aktive Betriebssicherheit von Schienenfahrzeugen durch eine mitlaufende Betriebsdatenerfassung und Auswertung zu erhöhen, in dem alle wesentlich erfassten Daten aus dem Betrieb der Sandstreuvorrichtungen für eine Auswertung gespeichert werden und alle für den unmittelbaren Fahrbetrieb wichtigen Daten in geeigneter Form an die Fahrzeugsteuerung bzw. den Fahrzeugführerstand geleitet und angezeigt werden.

Diese Aufgabe wird durch die Maßnahme nach dem kennzeichnenden Teil des Anspruches 1 gelöst. Dabei wird das Sandvolumen über ein Zellenrad dosiert, dessen Drehzahl gemessen wird, und nach einem weiteren Merkmal der Erfindung wird das Produkt aus Sandvolumen und Verbrauch pro Zeiteinheit auf einer Kontrollstelle sichtbar gemacht. Dadurch kann der Zugführer allenfalls anhand einer Tabelle feststellen, wie lange er mit einem bestimmten Sandvorrat das Auslangen hat. Der Antrieb des Zellenrades ist mittels einer separaten elektronischen Steuereinheit-Drehzahl (Sandmengen) geregelt, z.B. mit einer fest eingestellten Drehzahl (konstante Sandmenge), oder über ein Tachosignal aus der Fahrzeugsteuerung mit einer stufenlosen, analog der Fahrzeuggeschwindigkeit angepassten Sandmengenregelung (proportional zur Fahrgeschwindigkeit stufenlose Sandmengen-Anpassung). Der Sandvorratsbehälter hat eine definierte Geometrie und somit ein konstantes Sandfüllvolumen. Das Austragsvolumen bei einem Zellenrad kann aus dem Volumen einer Zelle des Zellenrades und der Drehzahl bzw. der Drehzahlimpulse berechnet werden.

Bei Erreichen einer vordefinierten effektiven Betriebszeit erfolgt nach einem weiteren Merkmal der Erfindung ein entsprechendes Wartungssignal für die Sandstreuvorrichtung an die Fahrzeugsteuerung bzw. den Fahrzeugführungsstand bzw. an die Betriebswerkstatt.

Die rechnerische Umwandlung des unmittelbaren Sandverbrauchs während eines Sandstreuvorgangs (konstantes Sandaustragsvolumen/ Zellenrad x Drehzahlimpulse) und Datenspeicherung ist ein weiteres Merkmal der Erfindung.

Die kontinuierliche rechnerische Ermittlung des Sandvorrats im Sandvorratsbehälter ist ein weiterer Vorteil.

Der Sandvorratsbehälter hat eine definierte Geometrie und somit ein konstantes Sand-Füllvolumen.

Der Sandvorratsbehälter verfügt über einen Sensor (z.B. kapazitive Schalter), der beim Betanken des Behälters den maximalen Füllstand erkennt und an die Rechnereinheit weiterleitet zwecks Rücksetzung der Füllstandsanzeige im Fahrzeugführerstand auf Behälter voll.

Das definierte Sandvolumen im Sandvorratsbehälter wird bei jedem Sandstreuvorgang rechnerisch um den effektiven Sandverbrauch reduziert, der jeweilige Restfüllstand errechnet, gespeichert und an den Fahrzeugführerstand übermittelt. Dort kann der Wert abgefragt oder angezeigt werden, bzw. bei Erreichen eines definierten Rest-(Reserve-)Sandfüllvolumens wird ein Warnsignal ausgelöst.

Durch die erfindungsgemäße Steuerung können die Streckenabschnitte im Schienennetz bzw. Fahrbetrieb bei einzelnen Gefahrenereignissen oder Gefahrenbereichen auf bestimmten Fahrtstrecken erfasst werden. Um den Sandstrom aus dem Sandbehälter störungsfrei zu sichern, ist es zweckmäßig, den Sandbehälter mit einem Rüttler zu versehen, welcher in Form von beispielsweise zwei Magneten an der Behälterhalterung angebracht ist und mit einer Frequenz von beispielsweise 10 Hz angeregt wird.

Nach einem weiteren Merkmal der Erfindung ist eine mehrstufige Einstellung der Dosiereinrichtung bzw. der Frequenz für den Rüttler vorgesehen.

Weitere Einzelheiten der Erfindung werden anhand der Zeichnungen näher erläutert.

Darin zeigen:

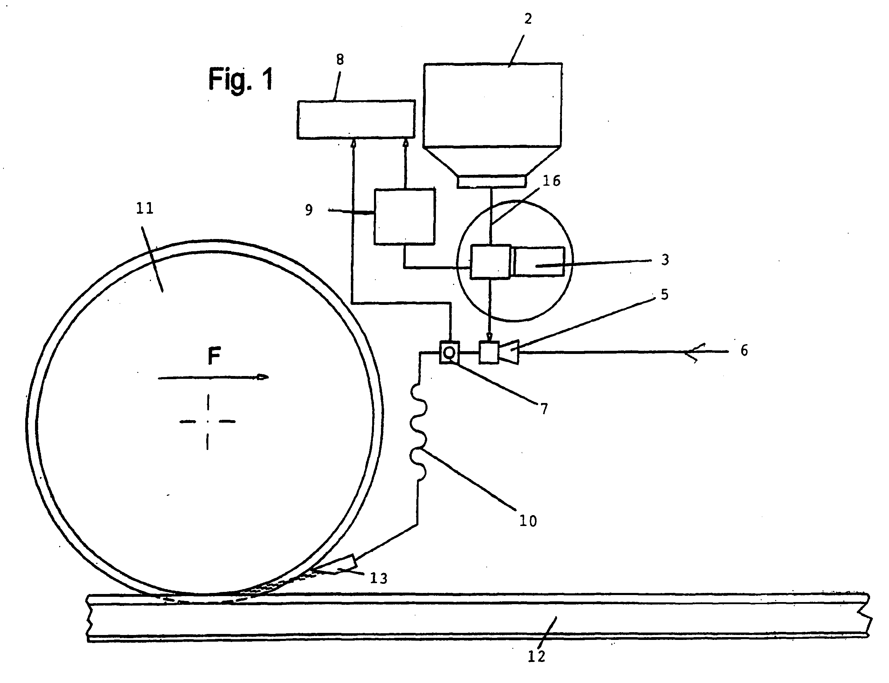

Fig. 1 eine schematische Darstellung des Steuersystems; und

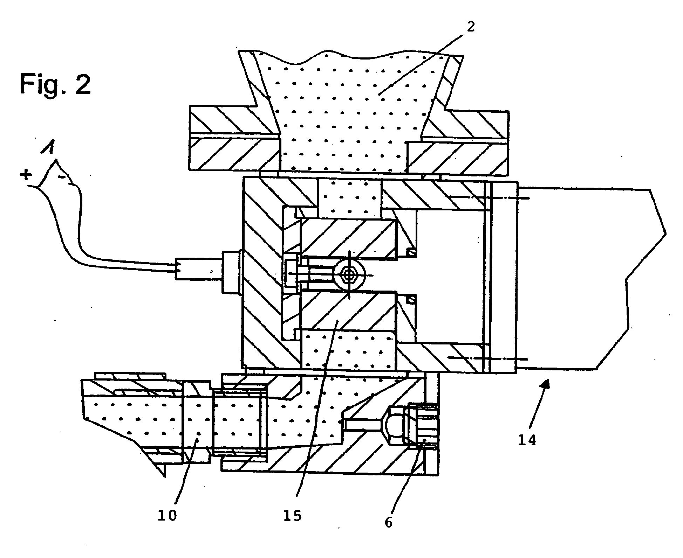

Fig. 2 einen Querschnitt durch den Sandvorratsbehälter mit den anschließenden Einrichtungen.

Der Sand wird von einem Sandvorratsbehälter 2 einer Dosiereinrichtung zugeführt, welche beispielsweise ein Zellenrad 15 sein kann, dessen Drehzahl durch einen z.B. induktiven Drehzahlgeber 3 erfasst werden kann.

Das Blockschaltbild besitzt einen Sandvorratsbehälter 2, bei welchem der Sand über eine Leitung 16 einem Injektor 5 zugeführt wird, aus welchem das Sandgut mittels Druckluft, welche von einer Druckluftleitung 6 kommend, über ein Diagnosesystem 7 und eine Sandleitung 10 einem Streurohr 13 zugeführt wird, aus welchem das Sandgut im Bereich des Rades 11 austritt. Das Diagnosesystem 7 besteht aus Sensoren, welche im Bereich des Flusses des Sandgutes vorgesehen und mit einer die ermittelten Daten auswertenden Einrichtung versehen sind, wobei die Photosensoren vorzugsweise einander gegenüberliegend oder parallel nebeneinander (Reflektorsystem) untergebracht sind und zu einer Recheneinheit 8 mit einem Datenspeicher geführt sind, von wo aus die Daten zu einer Fahrzeugsteuerung bzw. einem Fahrzeugführerstand zugeführt werden. Die Recheneinheit 8 ist an einen Impulszähler 9 angeschlossen, welcher die Umdrehungen eines Zellenrades 15 zählt.

Der z.B. induktive Drehzahlgeber 3 und das vom Motor 14 angetriebene Zellenrad 15 fördern das Sandgut in dosierter Menge in die Sandleitung 10, aus der es durch die von der Druckluftleitung 6 kommenden Druckluft dem Streurohr 13 zugeführt wird, welches das Sandgut wie angedeutet, vor das auf einer Schiene 12 laufende Rad 11 fördert, das sich im vorliegenden Fall in Richtung des Pfeiles F dreht.

Durch die erfindungsgemäße Verfahrensweise und Einrichtung, beispielsweise aufgrund einer Tabelle und den ausgewerteten Daten oder einer automatisierten Anzeige, kann der Fahrzeuglenker erkennen, wie lange er mit dem vorhandenen Sandvolumen auskommt und wann ein Nachfüllen erforderlich ist; außerdem können auch Instandhaltungsmaßnahmen der Sandstreuvorrichtung nutzungsabhängig exakt geplant werden.

Ein vorhandenes Schienennetz kann beispielsweise in Streckenabschnitte unterteilt werden, so dass in Abhängigkeit von den vorhandenen Betriebsverhältnissen der Verbrauch des Sandgutes pro Zeit- und Streckeneinheit genau berechnet bzw. erkannt werden kann, wo sich besondere Gefahrensbereiche im Streckennetz befinden.

## Patentansprüche

1. Verfahren zur Überwachung des Sandvorrates in einem Sandvorratsbehälter (2) einer Sandstreuvorrichtung eines Fahrzeuges, insbesondere eines Schienenfahrzeuges, vor allem eines Express- oder Schnellzuges, wobei ein Impulsgeber, z.B. eine Selenzelle, zur Überwachung des Niveaus des Sandvorrates vorgesehen ist und diesen an einer Kontrollstelle, insbesondere im Bereich des Fahrzeugführers, beispielsweise am Armaturenbrett, anzeigt, **dadurch gekennzeichnet, dass** ein Diagnosesystem (7) den einem Injektor (5) durch eine Sandzufuhrleitung (10) zugeführten Sandstrom überwacht und das Vorbeiströmen des Sandstromes an die Kontrollstelle meldet,
wobei der Sandstrom in aufeinanderfolgende Zellen eines Zellenrades (15) eingeleitet wird, und wobei die Umdrehungszahl des Zellenrades (15) gemessen wird, worauf das Sandvolumen pro Zeiteinheit beispielsweise nach einer Tabelle oder auf einen Rechner gestützt ebenfalls gemessen und als Verbrauch pro Zeiteinheit auf der Kontrollstelle, vorzugsweise im Bereich des Fahrzeugführers, sichtbar gemacht wird.

2. Verfahren nach Anspruch 1, **dadurch gekennzeichnet, dass** bei Erreichen einer definierten effektiven Betriebszeit ein entsprechendes Wartungssignal für die Sandstreuvorrichtung an die Fahrzeugsteuerung bzw. den Fahrzeugführungsstand erfolgt.

3. Verfahren nach einem der Ansprüche 1 bis 2, **dadurch gekennzeichnet, dass** die Regelung der Drehzahl des Zellenrades (15) über ein Tachosignal erfolgt und die Sandmenge fahrgeschwindigkeitsabhängig stufenlos zur Verfügung gestellt wird.

4. Einrichtung zur Durchführung des Verfahrens nach einem der Ansprüche 1 bis 2, **dadurch gekennzeichnet, dass** der Antrieb des Zellenrades (15) mittels einer eigenen elektronischen Steuereinheit geregelt ist.

## Claims

1. A method of monitoring the sand supply in a sand-supply tank (2) of a sand-scattering device in a vehicle, in particular in a rail vehicle, mainly in an express train, wherein a pulse generator, e.g. a selenium cell, is provided for monitoring the sand-supply level and indicates the same at an inspection point, in particular in the region of the vehicle driver, for example on the instrument panel, **characterised in that** a diagnosis system (7) monitors the sand flow supplied to an injector (5) through a sand supply line (10) and informs the inspection point about the sand flow flowing past,
wherein the sand flow is introduced into successive cells of a star feeder (15), and wherein the number of revolutions of the star feeder (15) is measured, whereupon the sand volume per time unit will also be measured, e.g. on the basis of a table or in a computer-assisted manner, and made visible at the inspection point, preferably in the region of the vehicle driver, as consumption per time unit.

2. The method according to claim 1, **characterised in that** when a defined effective operating time has been reached, a corresponding maintenance signal for the sand-scattering device is sent to the vehicle control and/or to the driver's cabin.

3. The method according to any one of claims 1 to 2, **characterised in that** the speed of the star feeder (15) is controlled via a speedometer signal, and **in that** the amount of sand is provided in a stepless manner as a function of the driving speed.

4. An apparatus for conducting the method according to any one of claims 1 to 2, **characterised in that** the drive of the star feeder (15) is controlled by means of a separate, electronic control unit.

## Revendications

1. Procédé de surveillance d'une réserve de sable dans un réservoir de sable (2) d'un dispositif de sablage d'un véhicule, plus particulièrement d'un véhicule sur rails, surtout d'un train express ou rapide, dans lequel un générateur d'impulsions, par exemple une cellule au sélénium, est prévu pour surveiller le niveau de la réserve de sable et présente celle-ci à un poste de contrôle, plus particulièrement dans la zone du conducteur du véhicule, par exemple sur le tableau de bord, **caractérisé en ce qu'**un système de diagnostic (7) surveille la coulée de sable amenée à un injecteur (5) via une conduite d'alimentation de sable (10) et signale le passage de la coulée de sable au niveau du poste de contrôle,
dans lequel la coulée de sable est déversée dans des godets successifs d'une roue à godets (15), et dans lequel le nombre de tours de la roue à godets (15) est mesuré, le volume de sable par unité de temps étant ensuite également mesuré, par exemple à partir d'un tableau ou en se basant sur un calculateur, et rendu visible en tant que consommation par unité de temps sur le poste de contrôle, de préférence dans la zone du conducteur du véhicule.

2. Procédé selon la revendication 1, **caractérisé en ce que**, lorsqu'un temps de fonctionnement effectif défini a été atteint, un signal de maintenance correspondant se déclenche pour le dispositif de sablage au niveau de la commande du véhicule ou du poste de pilotage du véhicule.

3. Procédé selon l'une des revendications 1 à 2, **caractérisé en ce que** la régulation du nombre de tours de la roue à godets (15) s'effectue via un signal tachymétrique et la quantité de sable est mise à disposition de manière continue en fonction de la vitesse du véhicule.

4. Equipement destiné à mettre en oeuvre le procédé selon l'une des revendications 1 à 2, **caractérisé en ce que** l'entraînement de la roue à godets (15) est régi via sa propre unité de commande électronique.
